# EUROPEAN PATENT APPLICATION

(11) **EP 2 822 161 A1**
(43) Date of publication of application: **07.01.2015**
(21) Application number: 12852442.8
(22) Date of filing: 05.06.2012
(51) Int. Cl.: H02K 33/10

(54) **MAGNETOELECTRIC HYBRID DRIVE METHOD AND POWER SET**

(30) Priority: 27.02.2012 CN 201210045416
(71) Applicant: Wu, Guangjin, Hunan 423000 (CN); Deng, Linfang, Hunan 423000 (CN)
(72) Inventor: Wu, Guangjin, Hunan 423000 (CN); Deng, Linfang, Hunan 423000 (CN)
(74) Representative: Chaillot, Geneviève
(86) International application number: PCT/CN2012/076484
(87) International publication number: WO 2013/127137

(57) **Abstract**

A method of magneto-electric hybrid drive and power unit, characterized in that the unit includes a trigger control circuit (5), a cylinder block (1), a permanent magnet set (2), a piston assembly (3) and a pole changing drive coil (4). The said piston assembly (3) is inserted and set in the cylinder barrel. The said permanent magnet set (2) includes an upper permanent magnet (21) and a lower permanent magnet (22). The said upper permanent magnet (21) is set on the top of the cylinder barrel. The said lower permanent magnet (22) is set on the upper end face of the piston assembly (3). The said pole changing drive coil (4) is set on the lower end face of the upper permanent magnet (21) and is connected with the said trigger control circuit (5). The unit converts electric energy into mechanical energy by employing the nature of magnet that opposite poles attract and like poles repel.

## Description

### Technical Field

### Method of Magneto-Electric Hybrid Drive and Power Unit

### Background Art

This invention pertains to the technical field of power unit and particularly to a method of magneto-electric hybrid drive and power unit.

Nowadays, energy consumption is steadily on the increase, and human's life, work and entertainment are inseparable from energy. The supply forms of existing energies mainly include petroleum, coal, natural gas and nuclear energy, in which petroleum, coal and natural gas are earth resources with limited reserves. The safety of nuclear energy development cannot be ignored. At present, with the increase of population and the social progress, the energy consumption all over the world increases by 2.7% every year. According to the prediction of International Energy Agency, petroleum will be exhausted in 50 years, natural gas in 60 years and coal in over 200 years. Therefore, human beings are unremittingly devoted to improving the existing power equipment technologies, seeking new energy and developing new technologies in a more positive manner.

Engine is a machine which can convert the energy of other forms into another kind of energy. Normally, it converts chemical energy into mechanical energy. (Electromotor is to convert electric energy into mechanical energy). Sometimes, it is applicable to power generating unit, also referring to the whole machine including power unit such as gasoline engine and aero-engine.

The existing motive power engines such as gasoline engine, diesel engine and fuel steamer have been widely applied in such fields as industry, agriculture, transportation and national defense. These machines bring convenience to people who use them, but they present a hidden danger for the society. Some of these equipment require huge investment, and some generate great fuel cost. The waste discharge and noise etc. cause serious environment pollution. The energies that the above engines use are nonrenewable resources such as coal and oil. Due to limited resources, people attach more importance to energy consumption. The energy conversion process is complicated, high in cost and low in efficiency. Moreover, it causes serious environment pollution.

### Disclosure of the Invention

In allusion to the above shortcomings, one of the purposes for this invention is to provide a method of magneto-electric hybrid drive that features simple technique and low cost and is easy to be realized.

The other purpose for this invention is to provide a power unit adopting the above method. The said power unit is designed with reasonable structure and high energy efficiency. It can relieve human's dependence on traditional energy and reduce environmental pollution caused by the extensive use of traditional fuel energy nowadays.

To realize the above purposes, the technical solutions provided by this invention include:

A method of magneto-electric hybrid drive, comprising the following steps:
(1) Prepare cylinder block. One or multiple cylinder barrels are set on the said cylinder block.
(2) Prepare permanent magnet set. The quantity of the said permanent magnet set is consistent with that of the cylinder barrels. The said permanent magnet set includes an upper permanent magnet and a lower permanent magnet. The said upper permanent magnet and lower permanent magnet are made of permanent magnet materials with magnetic energy.
(3) Set the upper permanent magnet on the top of the cylinder barrel.
(4) Prepare piston assembly. The quantity of the said piston assembly is consistent with that of the cylinder barrel. The piston assembly is inserted into its corresponding cylinder barrel. The lower permanent magnet is set on the upper end face of the said piston assembly and the polarity of the said lower permanent magnet is adjusted to form a repellent magnetic field between the lower permanent magnet and the upper permanent magnet. With the repulsion of the said repellent magnetic field, the piston assembly can be forced to move downward.
(5) Prepare pole changing drive coil. The quantity of the said pole changing drive coil is consistent with that of the cylinder barrel. The pole changing drive coil is set on the lower end face of the upper permanent magnet. After being connected with the power supply, the said pole changing drive coil can automatically generate an attractive magnetic field with the lower permanent magnet. The attraction of the said attractive magnetic field is greater than the repulsion of the repellent magnetic field. With the attraction of the said attractive magnetic field, the piston assembly can be forced to move upward.
(6) Prepare trigger control circuit. The said trigger control circuit is connected with the said pole changing drive coil. It can have the pole changing drive coil disconnected from or connected with the power supply according to the operating state of the piston assembly.
(7) In initial state and with the action of the repellent magnetic field, the piston assembly is away from the bottom stop position of the upper permanent magnet.
(8) The trigger control circuit has the pole changing drive coil connected with the power supply, and the pole changing drive coil generates an attractive magnetic field. With the attraction of the said attract magnetic field, the piston assembly can be driven to move upward until the top stop position.
(9) The trigger control circuit has the pole changing drive coil disconnected from the power supply, and the pole changing drive coil stops generating an attractive magnetic field. Meanwhile, with the repulsion of the repellent magnetic field formed between the lower permanent magnet and the upper permanent magnet, the piston assembly is forced to move downward until the bottom stop position.
(10) Repeat steps (7)-(9) to have the said piston assembly moved downward and upward repeatedly to generate power.

The said step (4) includes the following specific steps:
(4.1) Prepare piston body;
(4.2) Prepare connecting rod;
(4.3) Prepare crankshaft;
(4.4) The piston assembly is made by connecting the upper end of the connecting rod with the said piston body and by connecting the lower end of the connecting rod with the crankshaft.

The said piston assembly further includes a flywheel that keeps the inertia. The said flywheel is set on the said crankshaft.

The said step (6) includes the following specific steps:
(6.1) Prepare the inductor which can induce the operating state of the piston assembly and send the signals of moving downward or upward;
(6.2) Prepare A/D converter;
(6.3) Prepare manual or automatic current controller;
(6.4) Prepare controller. The said controller can analyze and process the signals of moving downward or upward sent by the inductor and have the pole changing drive coil disconnected from or connected with the power supply;
(6.5) The trigger control circuit is made by connecting the inductor, the A/D converter and the controller successively and by connecting the pole changing drive coil, the manual or automatic current controller and the controller successively.

It further includes the following steps:
(11) Supplement magnetic energy for the said upper permanent magnet and/or lower permanent magnet.

A power unit adopting the above method includes a trigger control circuit, a cylinder block that is set with one or multiple cylinder barrel(s), a permanent magnet set, a piston assembly and a pole changing drive coil. The quantity of the said permanent magnet set, piston assembly and pole changing drive coil is consistent with that of the said cylinder barrel. The said piston assembly is inserted and set in the cylinder barrel. The said permanent magnet set includes an upper permanent magnet and a lower permanent magnet. The said upper permanent magnet is set on the top of the cylinder barrel. The said lower permanent magnet is set on the upper end face of the piston assembly. The said pole changing drive coil is set on the lower end face of the upper permanent magnet and is connected with the said trigger control circuit.

Said piston assembly includes piston body, connecting rod and crankshaft. The upper end of said connecting rod is connected with said piston body, and the lower end of connecting rod is connected with crankshaft.

The said piston assembly further includes a flywheel that keeps the inertia. The said flywheel is set on the said crankshaft. The said upper permanent magnet and lower permanent magnet are made of permanent magnet materials with magnetic energy.

The said trigger control circuit includes an inductor, an A/D converter, a controller and a manual or automatic current controller. The said inductor, A/D converter and controller are connected successively. The said pole changing drive coil, manual or automatic current controller and controller are connected successively.

The said inductor includes an induction coil, a magnet at bottom stop position and a magnet at top stop position. The said induction coil is set on one side of the flywheel. The said magnet at top stop position and magnet at bottom stop position corresponding to the position of the induction coil are symmetrically set on the flywheel. The said controller includes an IC that pre-stores control program command, a pulse amplifier, a coupling transformer and a silicon controlled rectifier. The said IC, pulse amplifier, coupling transformer and silicon controlled rectifier are connected successively.

Beneficial effects of this invention: The method provided in this invention is simple, easy to be realized and low in cost. The power unit provided in this invention is designed with reasonable structure and utilizes magneto-electricity to generate power by effectively employing the nature of magnet that opposite poles attract and like poles repel. It can improve energy efficiency, relieve human's dependence on traditional energy and reduce environmental pollution caused by the extensive use of traditional fuel energy nowadays. Moreover, it features smart and simple structure, low manufacturing cost and thus has great market promotion value.

In actual operation, intermittent magnetizing is required for the upper permanent magnet and/or lower permanent magnet so as to maintain the continual operation of the technical solutions of this invention. Via continual supplement of magnetic energy, mechanical energy can be generated continuously after energy conversion.

Further explanation for this invention is given through the following figures and embodiments.

### Brief Description of Drawings

Fig.1 is structure diagram 1 of this invention;
Fig.2 is structure diagram 2 of this invention;
Fig.3 is structure diagram of double-cylinder of this invention.

### Best Mode for Carrying out the Invention

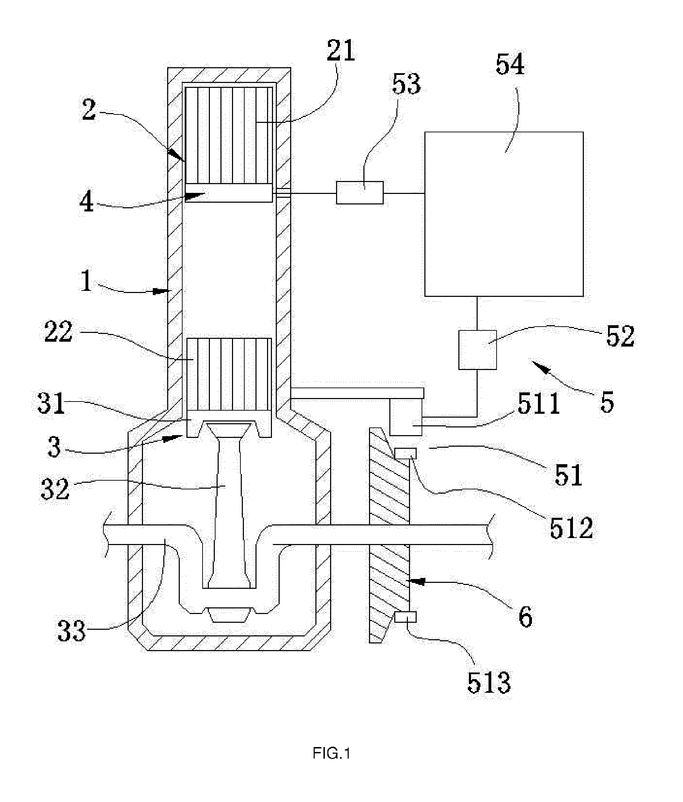

Embodiment: Refer to Fig. 1-3. This embodiment provides a method of magneto-electric hybrid drive including the following steps:
(1) Prepare cylinder block 1. One or multiple cylinder barrels are set on the said cylinder block 1.
(2) Prepare permanent magnet set 2. The quantity of the said permanent magnet set 2 is consistent with that of the cylinder barrel. The said permanent magnet set 2 includes an upper permanent magnet 21 and a lower permanent magnet 22. The said upper permanent magnet 21 and lower permanent magnet 22 are made of permanent magnet materials with magnetic energy.
(3) Set the upper permanent magnet 21 on the top of the cylinder barrel.
(4) Prepare piston assembly 3. The quantity of the said piston assembly 3 is consistent with that of the cylinder barrel. The piston assembly 3 is inserted into its corresponding cylinder barrel. The lower permanent magnet 22 is set on the upper end face of the piston assembly 3 and the polarity of the said lower permanent magnet 22 is adjusted to form a repellent magnetic field between the lower permanent magnet 22 and the upper permanent magnet 21. With the repulsion of the said repellent magnetic field, the piston assembly 3 can be forced to move downward.
(5) Prepare pole changing drive coil 4. The quantity of the said pole changing drive coil 4 is consistent with that of the cylinder barrel. The pole changing drive coil 4 is set on the lower end face of the upper permanent magnet 21. After being connected with the power supply, the said pole changing drive coil 4 can automatically generate an attractive magnetic field with the lower permanent magnet 22. The attraction of the said attractive magnetic field is greater than the repulsion of the repellent magnetic field. With the attraction of the said attractive magnetic field, the piston assembly 3 can be forced to move upward.
(6) Prepare trigger control circuit 5. The said trigger control circuit 5 is connected with the said pole changing drive coil 4. It can have the pole changing drive coil 4 disconnected from or connected with the power supply according to the operating state of the piston assembly 3.
(7) In initial state and with the action of the repellent magnetic field, the piston assembly 3 is away from the bottom stop position of the upper permanent magnet 21.
(8) The trigger control circuit 5 has the pole changing drive coil 4 connected with the power supply, and the pole changing drive coil 4 generates an attractive magnetic field. With the attraction of the said attract magnetic field, the piston assembly 3 can be driven to move upward until the top stop position.
(9) The trigger control circuit 5 has the pole changing drive coil 4 disconnected from the power supply, and the pole changing drive coil 4 stops generating an attractive magnetic field. Meanwhile, with the repulsion of the repellent magnetic field formed between the lower permanent magnet 22 and the upper permanent magnet 21, the piston assembly 3 is forced to move downward until the bottom stop position.
(10) Repeat steps (7)-(9) to have the said piston assembly 3 moved downward and upward repeatedly to generate power.

The said step (4) includes the following specific steps:
(4.1) Prepare piston body 31;
(4.2) Prepare connecting rod 32;
(4.3) Prepare crankshaft 33;
(4.4) The piston assembly 3 is made by connecting the upper end of the connecting rod 32 with the said piston body 31 and by connecting the lower end of the connecting rod 32 with the crankshaft 33.

The said piston assembly 3 further includes a flywheel 6 that keeps the inertia. The said flywheel 6 is set on the said crankshaft 33.

The said step (6) includes the following specific steps:
(6.1) Prepare inductor 51. The said inductor 51 can induce the operating state of the piston assembly 3 and send the signals of moving downward or upward;
(6.2) Prepare A/D converter 52;
(6.3) Prepare manual or automatic current controller 53;
(6.4) Prepare controller 54. The said controller 54 can analyze and process the signals of moving downward or upward sent by the inductor 51 and have the pole changing drive coil 4 disconnected from or connected with the power supply;
(6.5) The trigger control circuit 5 is made by connecting the inductor 51, the A/D converter 52 and the controller 54 successively and by connecting the pole changing drive coil 4, the manual or automatic current controller 53 and the controller 54 successively.

It further includes the following steps:
(11) Supplement magnetic energy for the said upper permanent magnet 21 and/or lower permanent magnet 22.

A power unit adopting the above method includes a trigger control circuit 5, a cylinder block 1 that is set with one or multiple cylinder barrel(s), a permanent magnet set 2, a piston assembly 3 and a pole changing drive coil 4. The quantity of the said permanent magnet set 2, piston assembly 3 and pole changing drive coil 4 is consistent with that of the said cylinder barrel. The said piston assembly 3 is inserted and set in the cylinder barrel. The said permanent magnet set 2 includes an upper permanent magnet 21 and a lower permanent magnet 22. The said upper permanent magnet 21 is set on the top of the cylinder barrel. The said lower permanent magnet 22 is set on the upper end face of the piston assembly 3. The said pole changing drive coil 4 is set on the lower end face of the upper permanent magnet 21 and is connected with the said trigger control circuit 5.

The said piston assembly 3 includes a piston body 31, a connecting rod 32 and a crankshaft 33. The upper end of the said connecting rod 32 is connected with the said piston body 31, and the lower end of the connecting rod 32 is connected with the crankshaft 33.

The said piston assembly 3 further includes a flywheel 6 that keeps the inertia. The said flywheel 6 is set on the said crankshaft 33. The said upper permanent magnet 21 and lower permanent magnet 22 are made of permanent magnet materials with magnetic energy.

The said trigger control circuit 5 includes an inductor 51, an A/D converter 52, a controller 54 and a manual or automatic current controller 53. The said inductor 51, A/D converter 52 and controller 54 are connected successively. The said pole changing drive coil 4, manual or automatic current controller 53 and controller 54 are connected successively.

The said inductor 51 includes an induction coil 511, a magnet at bottom stop position 512 and a magnet at top stop position 513. The said induction coil 511 is set on one side of the flywheel 6. The said magnet at top stop position 513 and magnet at bottom stop position 512 corresponding to the position of the induction coil 511 are symmetrically set on the flywheel 6. The said controller 54 includes an IC that pre-stores control program command, a pulse amplifier, a coupling transformer and a silicon controlled rectifier. The said IC, pulse amplifier, coupling transformer and silicon controlled rectifier are connected successively.

The method provided in this invention is simple, easy to be realized and low in cost. The power unit provided in this invention is designed with reasonable structure and utilizes magneto-electricity to generate power by effectively employing the nature of magnet that opposite poles attract and like poles repel. It can improve energy efficiency, relieve human's dependence on traditional energy and reduce environmental pollution caused by the extensive use of traditional fuel energy nowadays. Moreover, it features smart and simple structure, low manufacturing cost and thus has great market promotion value.

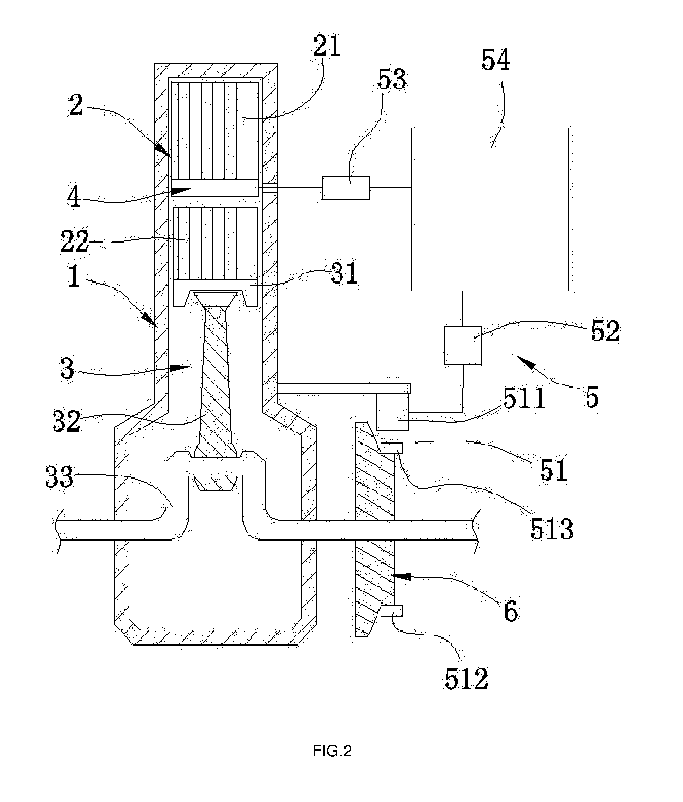

Refer to Fig. 1 for operation and initial state. With the action of the repellent magnetic field, the piston assembly 3 is away from the bottom stop position of the upper permanent magnet 21. The magnet at bottom stop position 512 on the flywheel 6 is directly opposite to the induction coil 511. The induction coil 511 induces and generates a pulse current and forms a signal of moving downward. The said signal of moving downward is sent to the controller 54 via the A/D converter 52. The said controller 54 analyzes and processes the said signal of moving downward and has the pole changing drive coil 4 connected with the power supply. The pole changing drive coil 4 generates an attractive magnetic field. With the attraction of the said attractive magnetic field, the piston assembly 3 can be driven to move upward until the top stop position. According to Fig. 2, the magnet at top stop position 513 on the flywheel 6 is directly opposite to the induction coil 511. The induction coil 511 induces and generates a pulse current and forms a signal of moving upward. The said signal of moving upward is sent to the controller 54 via the A/D converter 52. The said controller 54 analyzes and processes the said signal of moving upward and has the pole changing drive coil 4 disconnected from the power supply. The pole changing drive coil 4 stops generating an attractive magnetic field. Meanwhile, with the repulsion of the repellent magnetic field formed between the lower permanent magnet 22 and the upper permanent magnet 21, the lower permanent magnet 22 forces the piston assembly 3 to rapidly move downward until the bottom stop position. Repeat the above actions to have the said piston assembly 3 moved downward and upward repeatedly to generate power.

During use, the current of the pole changing drive coil 4 can be regulated by the manual or automatic current controller 53 so as to control the revolving speed and power of the power unit. In this embodiment, manual current controller is adopted. In other embodiments, automatic current controller can be adopted where appropriate.

After long-term use, intermittent magnetizing is required for the upper permanent magnet 21 and/or lower permanent magnet 22 so as to maintain the continual operation of the technical solutions of this invention. Via continual supplement of magnetic energy, mechanical energy is can be generated continuously after energy conversion.

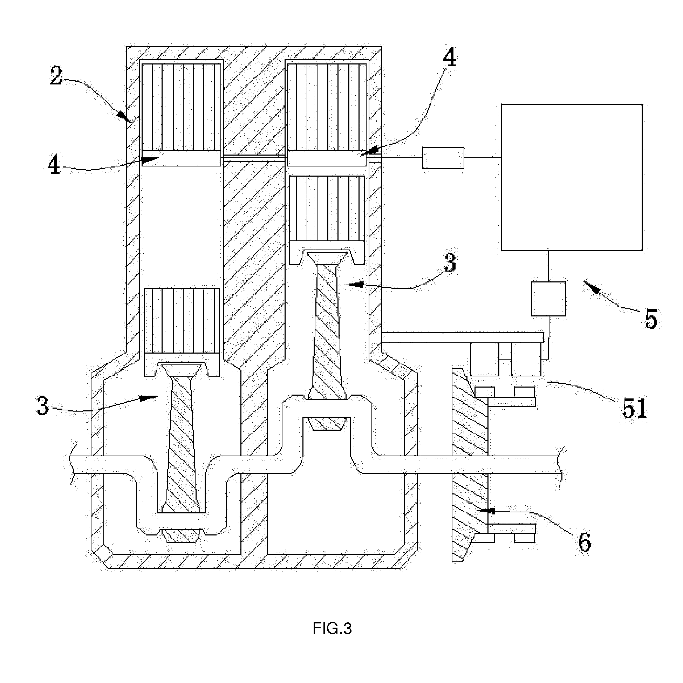

Refer to Fig.3 for the double-cylinder structure design of this invention. In addition, three-cylinder or multi-cylinder structure can be set according to the power requirement. Then, the quantity of the permanent magnet set 2, the piston assembly 3 and the pole changing drive coil 4 and their operating rules can be set accordingly.

As described in the above embodiments for this invention, other drive methods and units obtained by the adoption of the same or similar techniques are within the protective scope of this invention.

## Claims

1. A method of magneto-electric hybrid drive, **characterized in that** it includes the following steps:
(1) Prepare cylinder block; one or multiple cylinder barrels are set on the said cylinder block;
(2) Prepare permanent magnet set; the quantity of the said permanent magnet set is consistent with that of the cylinder barrel; the said permanent magnet set includes an upper permanent magnet and a lower permanent magnet; the said upper permanent magnet and lower permanent magnet are made of permanent magnet materials with magnetic energy;
(3) Set the upper permanent magnet on the top of the cylinder barrel;
(4) Prepare piston assembly; the quantity of the said piston assembly is consistent with that of the cylinder barrel; the piston assembly is inserted into its corresponding cylinder barrel; the lower permanent magnet is set on the upper end face of the said piston assembly and the polarity of the said lower permanent magnet is adjusted to form a repellent magnetic field between the lower permanent magnet and the upper permanent magnet; with the repulsion of the said repellent magnetic field, the piston assembly can be forced to move downward;
(5) Prepare pole changing drive coil; the quantity of the said pole changing drive coil is consistent with that of the cylinder barrel; the pole changing drive coil is set on the lower end face of the upper permanent magnet; after being connected with the power supply, the said pole changing drive coil can automatically generate an attractive magnetic field with the lower permanent magnet; the attraction of the said attractive magnetic field is greater than the repulsion of the repellent magnetic field; with the attraction of the said attractive magnetic field, the piston assembly can be forced to move upward;
(6) Prepare trigger control circuit; the said trigger control circuit is connected with the said pole changing drive coil; it can have the pole changing drive coil disconnected from or connected with the power supply according to the operating state of the piston assembly;
(7) In initial state and with the action of the repellent magnetic field, the piston assembly is away from the bottom stop position of the upper permanent magnet;
(8) The trigger control circuit has the pole changing drive coil connected with the power supply, and the pole changing drive coil generates an attractive magnetic field; with the attraction of the said attract magnetic field, the piston assembly can be driven to move upward until the top stop position.
(9) The trigger control circuit has the pole changing drive coil disconnected from the power supply, and the pole changing drive coil stops generating an attractive magnetic field; meanwhile, with the repulsion of the repellent magnetic field formed between the lower permanent magnet and the upper permanent magnet, the piston assembly is forced to move downward until the bottom stop position;
(10) Repeat steps (7)-(9) to have the said piston assembly moved downward and upward repeatedly to generate power.

2. The method of magneto-electric hybrid drive as set forth in Claim 1, **characterized in that** the said step (4) includes the following specific steps:
(4.1) Prepare piston body;
(4.2) Prepare connecting rod;
(4.3) Prepare crankshaft;
(4.4) The piston assembly is made by connecting the upper end of the connecting rod with the said piston body and by connecting the lower end of the connecting rod with the crankshaft.

3. The method of magneto-electric hybrid drive as set forth in Claim 2, **characterized in that** the said piston assembly further includes a flywheel that keeps the inertia; the said flywheel is set on the said crankshaft.

4. The method of magneto-electric hybrid drive as set forth in Claim 3, **characterized in that** the said step (6) includes the following specific steps:
(6.1) Prepare the inductor which can induce the operating state of the piston assembly and send the signals of moving downward or upward;
(6.2) Prepare A/D converter;
(6.3) Prepare manual or automatic current controller;
(6.4) Prepare controller; the said controller can analyze and process the signals of moving downward or upward sent by the inductor and have the pole changing drive coil disconnected from or connected with the power supply;
(6.5) The trigger control circuit is made by connecting the inductor, the A/D converter and the controller successively and by connecting the pole changing drive coil, the manual or automatic current controller and the controller successively.

5. The method of magneto-electric hybrid drive as set forth in Claim 1, **characterized in that** it further includes the following steps:
(11) Supplement magnetic energy for the said upper permanent magnet and/or lower permanent magnet.

6. A power unit adopting any method of the said magneto-electric hybrid drive as set forth in Claims 1-5, **characterized in that** it includes a trigger control circuit, a cylinder block that is set with one or multiple cylinder barrel(s), a permanent magnet set, a piston assembly and a pole changing drive coil; the quantity of the said permanent magnet set, piston assembly and pole changing drive coil is consistent with that of the said cylinder barrel; the said piston assembly is inserted and set in the cylinder barrel; the said permanent magnet set includes an upper permanent magnet and a lower permanent magnet; the said upper permanent magnet is set on the top of the cylinder barrel; the said lower permanent magnet is set on the upper end face of the piston assembly; the said pole changing drive coil is set on the lower end face of the upper permanent magnet and is connected with the said trigger control circuit.

7. The power unit as set forth in Claim 6, **characterized in that** the said piston assembly includes a piston body, a connecting rod and a crankshaft; the upper end of the said connecting rod is connected with the said piston body, and the lower end of the connecting rod is connected with the crankshaft.

8. The power unit as set forth in Claim 7, **characterized in that** the said piston assembly further includes a flywheel that keeps the inertia; the said flywheel is set on the said crankshaft; the said upper permanent magnet and lower permanent magnet are made of permanent magnet materials with magnetic energy.

9. The power unit as set forth in Claim 8, **characterized in that** the said trigger control circuit includes an inductor, an A/D converter, a controller and a manual or automatic current controller; the said inductor, A/D converter and controller are connected successively; the said pole changing drive coil, manual or automatic current controller and controller are connected successively.

10. The power supply unit as set forth in Claim 9, **characterized in that** the said inductor includes an induction coil, a magnet at bottom stop position and a magnet at top stop position; the said induction coil is set on one side of the flywheel; the said magnet at top stop position and magnet at bottom stop position corresponding to the position of the induction coil are symmetrically set on the flywheel; the said controller includes an IC that pre-stores control program command, a pulse amplifier, a coupling transformer and a silicon controlled rectifier; the said IC, pulse amplifier, coupling transformer and silicon controlled rectifier are connected successively.
